Europäisches Patentamt

European Patent Office

Office européen des brevets

(19)

(11) Publication number: **0 029 594**
**A1**

# (12) EUROPEAN PATENT APPLICATION

(21) Application number: **80107268.7**

(22) Date of filing: **21.11.80**

(51) Int. Cl.³: **C 09 D 3/81**
**C 09 D 3/80, C 08 L 33/06**

(30) Priority: **21.11.79 US 96285**
**05.05.80 US 146269**

(43) Date of publication of application:
**03.06.81 Bulletin 81/22**

(84) Designated Contracting States:
**BE CH DE FR GB IT LI NL SE**

(71) Applicant: **E.I. DU PONT DE NEMOURS AND COMPANY**
**Legal Department 1007 Market Street**
**Wilmington, Delaware 19898(US)**

(72) Inventor: **Chang, David Chi-Kung**
**945 Stephenson Highway**
**Troy Michigan 48084(US)**

(74) Representative: **Abitz, Walter, Dr.-Ing. et al,**
**Abitz, Morf, Gritschneder P.O. Box 86 01 09**
**D-8000 München 86(DE)**

(54) A liquid acrylic coating composition, articles coated therewith and process for preparing said coated articles.

(57) A liquid coating composition is disclosed comprising 10-60% by weight of film-forming polymer and solvent for said polymer wherein said polymer consists essentially of
(a) 50-80% by weight of an acrylic polymer which consists essentially of
styrene, methyl methacrylate, an alkyl (meth)acrylate, a hydroxyalkyl (meth)acrylate, and an a,ß-unsaturated monocarboxylic acid;
(b) 5-50 % by weight, based on the weight of the polymer, of cellulose acetate butyrate;
(c) 5-50% by weight, based on the weight of the polymer, of a melamine formaldehyde resin; and
(d) at least one ultraviolet light stabilizer.
The weatherability and durability of finishes prepared therefrom are significantly increased.

FF-7623-A

TITLE

"A Liquid Acrylic Coating Composition,
Articles Coated therewith and Process
for Preparing said Coated Articles".

BACKGROUND OF THE INVENTION

This invention relates to coating compositions. In particular, it is directed toward thermosetting acrylic enamels containing ultraviolet light stabilizers, which enamels give a high quality weather resistant coating, especially useful for coating the exterior of automobile and truck bodies. The enamels are prepared as disclosed in Parker United States Patent 3,637,546 issued January 25, 1972. The addition of one or more ultraviolet light stabilizers serves to diminish the degradation effects of the ultraviolet radiation in the sunlight. Optionally, the enamels also contain one or more antioxidants.

Sunlight is composed of electromagnetic radiation with energy in the infrared, visible, and ultraviolet portions of the spectrum. When the ultraviolet portion of sunlight falls upon a clear surface coating, the energy may be partially or wholly absorbed by the coating. In many instances, the energy absorbed initiates a photochemical reaction which causes discoloration and/or physical failure of the coating. Pigmented surface coatings also suffer from ultraviolet degradation. The inclusion of an ultraviolet light stabilizer can increase the useful life of both clear and pigmented coatings. Ultraviolet light stabilizers protect the coatings by absorbing the destructive, high energy ultraviolet rays and converting such energy into nondestructive heat energy.

Antioxidants are useful in preventing the oxidation of polymers, or for inhibiting oxidation already begun by oxygen, air, ozone, or oxidizing agents of many types. The rate of thermal oxidation of the polymeric systems used in coating compositions is normally rather slow, i.e., a reaction that occurs over weeks, months, or years under ordinary conditions. However, even though the reaction is often slow, pronounced effects may be readily observable very early in the degradation reaction. Furthermore, more rapid oxidative degradation occurs in the presence of ultraviolet radiant energy. Antioxidants can assist ultraviolet light stabilizers in effectively retarding this degradation.

Thermosetting acrylic enamel finishes are widely used on the exterior of automobiles and trucks. It has been found that an excellent appearance along with depth of color and metallic glamour can be obtained by applying a clear or transparent coat over the conventional colored or pigmented coat. However, the weatherability and durability of these clear coats have been found to be poor. Checking, cracking, and flaking of the clear coat occur after relatively short periods of exposure to outdoor weathering, giving the automobile or truck an unsightly appearance. Refinishing of these weathered clear coats is difficult and expensive, since the clear coat must be sanded to remove cracked and flaked clear coat before a refinish coat can be applied.

In an effort to retard or substantially reduce checking, cracking and flaking of the clear coat, conventional ultraviolet light stabilizers have been added to the clear coat. Also, the combination of a transparent pigment and an ultraviolet light screener has been added to the clear coat, as suggested by LaBerge United States Patent 3,407,156 issued October 22, 1968. In each of the above cases, the durability and weatherability of the clear coat was increased for a relatively small length of time but not to the extent required for a practical automotive or truck finish. There exists a felt need for acrylic enamels effectively stabilized against ultraviolet radiation for use in a clear coat/color coat system.

Ultraviolet light stabilizers have traditionally been used only in those coating compositions which are utilized as topcoats. The problem with this procedure has been the tendency of the stabilizers to leach out of the topcoat and escape into the atmosphere, leaving the topcoat susceptible to weathering.

The composition of this invention, containing ultraviolet light stabilizer and, optionally, antioxidant, has a preferred utility of being used as a clear coat/color coat finish and particularly as the color coat of such a finish. It is theorized that the ultraviolet light stabilizer will migrate from the color coat into the clear coat, thereby protecting the clear coat against weathering. The preferred finish is one in which both the clear coat and the color coat contain as additives one or more ultraviolet light stabilizers and one or more antioxidants. Some of the additives will be consumed from the clear surface through leaching, evaporation, and photochemical reaction. The high concentration of additives in the color coat will serve as a reservoir and replenish the lost additives through diffusion from the color coat to the clear coat.

Thermosetting acrylic enamels prepared according to the teachings of Parker United States Patent 3,637,546 are characterized by increased freedom from water spotting and have excellent craze resistance in combination with outstanding durability and gloss retention. The Parker enamels are resistant to aromatic solvents and are particularly resistant to gasoline.

They show improved adhesion to metal substrates when compared with conventional acrylic enamels. While the Parker enamels are cross-linking enamels, they can be spot-repaired using the same technique as is used to repair lacquer coatings, i.e., a solvent mist is applied to soften the damaged coating, and the repair coating is applied and then baked to a hard, glossy finish which has the appearance of a lacquer coating. Moreover, these enamels can be applied at substantially higher spray solids than conventional lacquers. Because the enamels provide a thicker film per application, only one to two coats need be applied whereas conventional lacquers require several coats to achieve a comparable film thickness.

For the foregoing reasons, the Parker thermosetting acrylic enamels are extremely useful as automotive coating compositions. The novel compositions of this invention, consisting essentially of the Parker enamels, ultraviolet light stabilizers, and, optionally, antioxidants, are even more useful, particularly when utilized in clear coat/color coat finishes as described.

## SUMMARY OF THE INVENTION

Thermosetting acrylic enamels are prepared according to the teachings of Parker United States Patent 3,637,546. The enamel may be either clear or pigmented, depending upon its intended use. These enamels contain about 1-20% by weight, based on the weight of the film-forming constituents, of ultraviolet light stabilizer. Optionally, they also contain about 0.1-5% by weight of antioxidant, wherein the weight ratio of ultraviolet light stabilizer to antioxidant is about 1:1 to about 50:1. Preferably, about 5-8% by weight of ultraviolet light stabilizer is used, optionally with about 0.1-1% by weight of antioxidant, wherein the weight ratio of ultraviolet light stabilizer to antioxidant is about 10:1. The specified percentages of ultraviolet light stabilizer or antioxidant may be obtained by combining two or more ultraviolet light stabilizers or two or more antioxidants as well as by utilizing such additives singularly.

## DETAILED DESCRIPTION OF THE INVENTION

A coating composition has been developed in which ultraviolet light stabilizer is incorporated into a thermosetting acrylic enamel prepared by the method disclosed in Parker United States Patent 3,637,546. The teachings of the Parker patent are hereby incorporated by reference.

The enamels comprise about 10-60% by weight of film-forming polymer and solvent for the polymer, wherein said polymer consists essentially of:

(1)    50-80% by weight, based on the weight of the film-forming constituents, of an acrylic polymer which consists essentially of

    (a)    0-25% by weight styrene,

    (b)    25-55% by weight methyl methacrylate,

    (c)    38-48% by weight of a soft constituent which is either an alkyl acrylate or an alkyl methacrylate in which the alkyl groups have 2-12 carbon atoms,

    (d)    5-20% by weight of a hydroxy containing constituent which is either a hydroxyalkyl acrylate or a hydroxyalkyl methacrylate in which the alkyl groups contain 2-4 carbon atoms, and

    (e)    1-5% by weight of an $\alpha,\beta$-unsaturated monocarboxylic acid;

wherein the acrylic polymer has a relative viscosity of 1.04-1.10 measured at 25°C. in ethylene dichloride according to ASTM D-445-46-T Method B;

(2)    5-50% by weight, based on the weight of the film-forming constituents, of cellulose acetate butyrate having a butyryl content of about 45-55% by weight

5 ·

and a viscosity at 25°C. of about 1-6 seconds measured according to ASTM D-1343-56; and

(3) 5-50% by weight, based on the weight of the film-forming constituents, of a melamine formaldehyde resin which has been at least partially reacted with an aliphatic monohydric alcohol having from 1-4 carbon atoms.

Particularly useful in these enamels are acrylic polymers of 10-12% by weight styrene, 25-30% by weight methyl methacrylate, 38-42% by weight butyl acrylate, 10-16% by weight hydroxyethyl acrylate and 1-3% by weight acrylic acid and acrylic polymers of 40-50% by weight methyl methacrylate, 40-48% by weight butyl acrylate, 6-10% by weight hydroxyethyl acrylate, and 3-5% by weight acrylic acid.

The acrylic polymer is prepared by conventional polymerization techniques in which the monomer constituents are blended with solvents and a polymerization catalyst and heated to 75-150°C. for about 2-6 hours to form a polymer that has a relative viscosity of about 1.04-1.10 and preferably about 1.06-1.09.

Typical solvents and diluents which are used to prepare the acrylic polymer and the coating composition of this invention are toluene, xylene, butyl acetate, acetone, methyl isobutyl ketone, methyl ethyl ketone, butyl alcohol, and other aliphatic, cycloaliphatic and aromatic hydrocarbons, esters, ethers, ketones, and alcohols, such as are conventionally used in coating compositions.

About 0.1-4% by weight, based on the weight of the monomer, of a polymerization catalyst is used to prepare the acrylic polymer. Typical catalysts are di-t-butyl peroxide, cumene hydroperoxide, azobisisobutyronitrile and the like.

Typical ultraviolet light stabilizers which are useful in this invention are as follows:

Benzophenones such as hydroxydodecycloxy-benzophenone, 2,4-dihydroxybenzophenone, hydroxybenzophenones containing sulfonic acid groups, 2,4-dihydroxy-3',5'-di-t-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of diallyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-$\beta$-(3,5-di-t-butyl-4-hydroxyphenyl)propionate, $\delta$,$\delta$'-bis(2-hydroxy-

phenyl)diisopropylbenzene, 3,5'-dibromo-2'-hydroxyacetophenone, ester derivatives of 4,4-bis(4'-hydroxyphenyl)pentanoic acid wherein there is at least one
unsubstituted position ortho to the aromatic hydroxyl
groups, organophosphorus sulfides such as bis(diphenyl-
phosphinothioyl)monosulfide and bis(diphenylphosphino-
thioyl)disulfide, 4-benzoyl-6-(dialkylhydroxybenzyl)
resorcinol, bis(3-hydroxy-4-benzoylphenoxy)diphenylsilane, bis(3-hydroxy-4-benzoylphenoxy)dialkylsilane,
1,8-naphthalimides, $\alpha$-cyano-$\beta$,$\beta$-diphenylacrylic acid
derivatives, bis(2-benzoxazolyl)alkanes, bis(2-napthoxa-
zolyl)alkanes, methylene malonitriles containing aryl
and heterocyclic substitutes, alkylenebis(dithio)carbamate, 4-benzoyl-3-hydroxyphenoxyethyl acrylate, 4-
benzoyl-3-hydroxyphenoxyethyl methacrylate, aryl- or
alkyl-substituted acrylonitriles, 3-methyl-5-isopropylphenyl-6-hydroxycoumarone.

Particularly useful ultraviolet light stabilizers that can be used are hindered amines of bipiperidyl
derivatives such as those disclosed in Murayama et al.,
U.S. Patent 4,061,616, issued December 6, 1977, column
2, line 65, through column 4, line 2, and nickel compounds such as /1-phenyl-3-methyl-4-decanoylpyrazolate
(5)7-Ni, bis/phenyldithiocarbamato7-Ni(II), and others
listed in the above patent, column 8, line 44 through
line 55.

Typical antioxidants are as follows: tetrakis-
alkylene dialkylhydroxyaryl alkyl ester alkanes such as
tetrakismethylene-3-(3',5'-dibutyl-4'-hydroxyphenyl)
propionate methane, the reaction product of p-aminodi-
phenylamine and glycidyl methacrylate, the reaction
product of n-hexyl-N'-phenyl-p-phenylene diamine and
glycidyl methacrylate, pentaerythritol tetrakis(thioglycolate), trimethylolpropane tris(thioglycolate),
trimethylolethane tris(thioglycolate), N-(4-anilino-
phenyl)acrylamide, N-(4-anilinophenyl)maleamic acid, N-(4-anilinophenyl)maleimide, alkylhydroxyphenyl groups bonded through carboalkoxy linkages to the nitrogen atom of a heterocyclic nucleus containing an imidocarbonyl group or an imidodithiocarbonyl group, 3,5-di-t-butyl-4-hydroxycinnamonitrile, ethyl-3,5-di-t-hexyl-4-hydroxycinnamate, substituted benzyl esters of β-substituted hydroxyphenylpropionic acids, bis(hydroxyphenylalkylene) alkyl isocyanurate compounds, tetrakishydroxybenzylphosphonium halides alone or in combination with a dialkyl-thiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphoro-thionates or phosphinothionates, diphenylbis(3,5-di-t-butyl-4-hydroxyphenoxy)silane, hydrocarbylhydroxy-phenyldihydrocarbyldithiocarbamates such as 3,5-di-t-butyl-4-hydroxyphenyldimethyldithiocarbamate and amino-benzylthioether.

Plasticizers can be used in the novel coating composition of this invention in amounts of up to 20% by weight of the film-forming material. Preferably, about 3-8% by weight of a plasticizer is used. Functional polymeric plasticizers which react with the constituents in the coating composition can be used, such as epoxidized soya bean oil, oil-free and oil-modified alkyls and polyesters, such as polyorthophthalate esters, polyalkylene adipate esters or polyarylene adipate esters. Volatile non-functional monomeric plasticizers can also be used.

If it is to be employed as a color coat, the enamel contains pigment in the amount of 0.1-20.0% pigment volume concentration. Preferably, a pigment volume concentration of about 0.3-6.0% is used. Examples of the great variety of pigments which are used in the novel coating composition of this invention are metallic oxides (preferably titanium dioxide, zinc oxide, and the like), metal hydroxides, metal flakes, metal powders, chromates (such as lead chromate), sulfides, sulfates, carbonates, carbon black, silica, talc, china clay, iron blues, organic reds, maroons, organic dyes, lakes, and the like. If the enamel is to be employed as a clear coat, it may contain one or more transparent pigments, _i.e._, pigments having the same or similar refractive index as the binder of the clear coat with a small particle size of about 0.015-50 microns.

Two particularly useful additives for both the color coat and clear coat are iron pyrophosphate and finely divided silica. Up to about 10% by weight of iron pyrophosphate and up to about 15% by weight of silica, based on the weight of the film-forming constituents, can be used. The addition of iron pyrophosphate and silica will improve the overall durability and performance of the finish. Although applicant does not wish to be bound by the following theory, it is believed that iron pyrophosphate creates a synergistic effect with ultraviolet light stabilizers and antioxidants, yielding a period of outdoor weatherability surpassing that which would cumulatively be expected from a combination of the three types of additives.

Thermosetting acrylic enamels prepared in the manner described and containing about 1-20% by weight, and preferably about 5-8% by weight, based on the weight of the film-forming constituents, of ultraviolet light stabilizer prove particularly useful in clear coat/color coat finishes. Such enamels may also contain about 0.1-5% by weight, and preferably about

11

0.1-1% by weight, of antioxidant. Where an antioxidant is used, the weight ratio of ultraviolet light stabilizer to antioxidant ranges from about 1:1 to about 50:1 and is preferably about 10:1.

The novel coating compositions of this invention can be applied to a variety of substrates, e.g., metal, wood, glass, and plastics such as polypropylene, styrene, and copolymers of styrene, by any of the usual application methods, e.g., spraying, electrostatic spraying, dipping, brushing, flow coating, and the like. Preferably, the coating composition is applied over a suitably primed metal substrate. These coatings can be air dried or can be baked to minimize the drying period. The resulting coating is about 1-5 mils thick, preferably 1-3 mils thick, and can be rubbed or polished in accordance with conventional techniques, if desired, to improve smoothness or apparent gloss or both.

After the novel coating composition is applied, the coating preferably is cured at about 125-175°C. for about 15-30 minutes. By the addition of conventional catalyst to the novel composition, the curing temperature can be reduced to 80-110°C. Typical catalysts that can be used are butyl acid phosphate, paratoluene sulfonic acid, and the like.

### EXAMPLE 1

The following constituents are blended together to form a Paint A (control):

| Portion 1 | Parts by Weight |
|---|---|
| Acrylic resin solution (13.80 parts of an acrylic resin of methyl methacrylate/butyl acrylate/acrylic acid in a weight ratio of 48/45/4 in 3.06 parts of ethylene glycol monoethyl ether acetate, 4.97 parts of a | 22.44 |

12

hydrocarbon solvent having a boiling point of 150-190°C., and .61 parts of butyl alcohol).

Portion 2

Aluminum flake mill base (4.27 parts of a copolymer of styrene/methyl methacrylate/butyl acrylate/hydroxyethyl acrylate/acrylic acid in a weight ratio of 30/18.5/40/10/1.5, 1.36 parts of fine particle aluminum flake, .28 parts of butyl acetate, and .21 parts of isopropyl alcohol).    6.12

Blue mill base (1.43 parts of a copolymer of styrene/butyl acrylate/hydroxyethyl acrylate/acrylic acid in a weight ratio of 50/38/8/4, .34 parts of aluminum benzoate coated with a lake of phthalocyanine blue, .18 parts of xylol, and .65 parts of butyl alcohol).    2.59

Green mill base (.08 parts of a copolymer of styrene/butyl acrylate/hydroxyethyl acrylate/acrylic acid in a weight ratio of 50/38/8/4, .02 parts of phthalocyanine green toner .02 parts of aromatic controlled VM&P naphtha, and .12 parts of butyl acetate).    .23

Portion 3

Cellulose acetate butyrate solution (6.25 parts of cellulose acetate butyrate in 4.95 parts of acetone, 16.95 parts of toluene, and 3.13 parts of isopropyl alcohol).    31.27

Methylated melamine resin (7.58 parts of methylated melamine resin in 1.62 parts of butyl alcohol and 1.62 parts of xylol).    10.82

Iron pyrophosphate solution (.10 parts of iron pyrophosphate, .37 parts of toluene, .26 parts of cellulose acetate butyrate solution (described above), .22 parts of an acrylic resin of methyl methacrylate/butyl acrylate/acrylic acid in a weight ratio of 48/45/4, and .07 parts of butyl benzyl phthalate).    1.03

Toluene    20.21

Isopropyl alcohol    4.60

Total    99.31

Portion 1 is charged into a mixing vessel and mixed for 10 minutes, Portion 2 is added and mixed for 10 minutes, and then Portion 3 is added and mixed for 20 minutes to form Paint A.

Paint B is prepared as follows:

| | Parts by Weight |
|---|---|
| Paint A (prepared above) | 50.00 |
| Ultraviolet light stabilizer /substituted 2-(2-hydroxyphenyl) benzotriazole/ | 0.880 |
| Antioxidant /tetrakismethylene-3(3',5'-dibutyl-4'-hydroxyphenyl) propionate methane/ | 0.088 |
| Total | 50.968 |

The above constituents are mixed together for 15 minutes to form Paint B.

A clear coating, Clear Coat A (control), is prepared by blending together the following constituents:

<div align="right">Parts by Weight</div>

Portion 1

    Acrylic resin solution (17.54 parts         28.50
of an acrylic resin of methyl methac-
rylate/butyl acrylate/acrylic acid in
a weight ratio of 48/45/4 in 3.88 parts
of ethylene glycol monoethyl ether
acetate, 6.32 parts of a high solvency
hydrocarbon containing approximately
95% aromatics, and .77 parts of butyl
alcohol)

Portion 2

    Melamine resin solution (6.43 parts of      9.18
methylated melamine resin in 1.38 parts
of butyl alcohol and 1.38 parts of xylol)

Portion 3

| | |
|---|---|
| Toluene | 35.85 |
| Anhydrous isopropyl alcohol | 4.76 |
| Ethylene glycol monoethyl ether acetate | 3.44 |
| Acetone | 3.03 |
| Cellulose acetate butyrate ester | 5.95 |
| Butylbenzyl phthalate | .66 |

Portion 4

    Iron pyrophosphate solution (.61 parts      7.77
of iron pyrophosphate, 2.23 parts of
toluene, 1.54 parts of cellulose acetate
butyrate solution /described above/, 1.32
parts of acrylic resin solution /same
composition as Portion 1), and .42 parts
of butylbenzyl phthalate, and 1.65 parts
of colloidal silica)

<div align="right">Total   99.16</div>

    The above constituents are blended together,
portion by portion, to form Clear Coat A.

    Clear Coat B is prepared as follows:

|  | Parts by Weight |
|---|---|
| Clear Coat A (prepared above) | 50.000 |
| Ultraviolet light stabilizer (described above) | 0.410 |
| Antioxidant (described above) | 0.041 |
|  | Total 50.451 |

Paint A (control) and Paint B are reduced to a spray viscosity of 47.5 seconds measured at 25°C. with a No. 1 Fisher Cup with a paint thinner of acetone/toluene/xylene in a ratio of 22.5/43.5/34. The reduced paints are each sprayed onto separate phosphatized steel panels and allowed to air dry for 10 minutes.

Clear Coat A (control) and Clear Coat B are similarly reduced to a spray viscosity. Clear Coat A (control) is sprayed onto the Paint A (control) coated panel, and Clear Coat B is sprayed onto the B coated panel. Each is allowed to air dry 10 minutes and then baked for 10 minutes at 82°C. and 30 minutes at 155°C. The clear coat on each of the panels is about 1.3 mils thick, and the paint is about 1.0 mil thick.

The panels are then exposed to a Q.U.V. "Weather-O-Meter" that uses a SF 40 Westinghouse ultraviolet lamp and has the following cycles: 8 hours ultraviolet exposure at 68°C. and 4 hours at 100% relative humidity at 55°C.

The gloss of each of the panels is measured at 20°C. after given exposure times and checking of the clear coat is noted. The results are as follows:

### EXPOSURE DATA

#### Gloss Measured At 20°

| Time Exposure (hrs.) | 0 | 500 | 1000 | 1500 | 2100 | 3000 |
|---|---|---|---|---|---|---|
| Clear Coat A/ Color Coat A (control) | 82 | 74 | 68 | 62 (blistered) | 40 | Failed |
| Clear Coat B/ Color Coat B | 88 | 88 | 85 | 85 | 84 | 82 |

EXPOSURE DATA, Cont.

| Time Exposure (hrs.) | 4000 | 4800 | 5000 | 5250 |
|---|---|---|---|---|
| Clear Coat A/ Color Coat A (control) | ---- | Failed | | ---- |
| Clear Coat B/ Color Coat B | 70 | 68 | 66 | 63 (checked) |

The results show that the control failed after 2100 hours while Clear Coat B/Color Coat B, containing an ultraviolet light stabilizer and an antioxidant, checked only after 5250 hours exposure. From these data, it can be expected that clear coat/color coat systems of an acrylic enamel containing iron pyrophosphate, antioxidant, and ultraviolet light stabilizer will have a substantially longer period of outdoor durability than that of the same acrylic enamel which contains iron pyrophosphate but does not contain antioxidant and ultraviolet light stabilizer.

EXAMPLE 2

An acrylic enamel containing cellulose acetate butyrate, identical to the enamel of Example 1, is prepared.

The following paints are prepared from the acrylic enamel using the same pigmentation as used in Example 1.

| | %, Based on Binder, Ultraviolet Stabilizer | %, Based on Binder, Antioxidant |
|---|---|---|
| Paint C | 0 | 0 |
| Paint E | 3.6 | 0 |
| Paint F | 8.3 | 0 |
| Paint G | 3.6 | 0.27 |

The following clear coats are prepared from the acrylic enamel:

17

| | %, Based on Binder, Ultraviolet Stabilizer | %, Based on Binder, Antioxidant |
|---|---|---|
| Clear Coat C | 0 | 0 |
| Clear Coat D | 6.3 | 0 |
| Clear Coat E | 3.6 | 0 |
| Clear Coat G | 3.6 | 0.27 |

Paints C, E, F and G are each reduced to a spray viscosity and are each sprayed onto separate phosphatized steel panels and allowed to dry for 10 minutes.

Clear coats C, D, E and G are each reduced to a spray viscosity and sprayed to form the following finishes on the panels:

Clear Coat C/Paint C (control)
Clear Coat D/Paint C
Clear Coat E/Paint E
Clear Coat C/Paint F
Clear Coat G/Paint G.

Each panel is dried and baked as in Example 1. The clear coat on each of the panels is about 1.0 mil thick, and the paint on each of the panels is about 1.0 mil thick.

The panels of Clear Coat D and Paint C in which the Clear Coat D contains 6.3% ultraviolet light stabilizer show a discoloration of the clear coat, and the clear coat is softer than the clear coat on the other panels. The discoloration and softness are attributed to the high ultraviolet light stabilizer content of the Clear Coat D.

The panels are then exposed to a "Weather-O-Meter" as in Example 1. The gloss of each of the panels is measured at 20° after given exposure times and checking of the clear coat is noted. The results are as follows:

EXPOSURE DATA

Gloss Measured At 20°

| Time Exposure (hrs.) | 0 | 167 | 330 | 659 | 988 | 1153 | 1480 | 1462 | 1855 |
|---|---|---|---|---|---|---|---|---|---|
| Clear Coat C/ Paint C (control) | 82 | 84 | 89 | 83 | 82 | 75 | 39* | -- Failed -- | |
| Clear Coat D/ Paint C | 81 | 82 | 88 | 88 | 82 | 87 | 84 | 87 | 91 |
| Clear Coat E/ Paint E | 86 | 86 | 89 | 90 | 93 | 92 | 88 | 94 | 98 |
| Clear Coat C/ Paint F | 87 | 87 | 88 | 89 | 91 | 91 | 84 | 93 | 95 |
| Clear Coat G/ Paint G | 84 | 86 | 87 | 89 | 89 | 91 | 86 | 93 | 94 |

EXPOSURE DATA, Cont.

| Time Exposure (hrs.) | 2044 | 2328 | 3011 | 3222 | 3900 | 4500 | 5300 |
|---|---|---|---|---|---|---|---|
| Clear Coat C/ Paint C (control) | ------ | F | A | I | L . E | D | ------ |
| Clear Coat D/ Paint C | 88 | 80 | 82 | 84 | 82 | 82* | 58* |
| Clear Coat E/ Paint E | 88 | 87 | 93 | 94 | 93 | 84* | 30* |
| Clear Coat C/ Paint F | 87 | 84 | 93 | 94 | 79* | 46* | -- |
| Clear Coat G/ Paint G | 93 | 90 | 96 | 88 | 62* | -- | -- |

* Checked

The above results show that the control which did not contain ultraviolet light stabilizer and antioxidant checked at 1480 hours exposure and failed thereafter. The panel having a finish of Clear Coat D, which contained a relatively large quantity of ultraviolet light stabilizer, and Paint C, which did not contain ultraviolet light stabilizer or antioxidant, checked at 4500 hours; however, the finish was unacceptable for color and softness of the clear coat. The other panels had an acceptable appearance and hardness. The panel having a finish of Clear Coat E and Paint E, in which both the clear coat and the color coat contained ultraviolet light stabilizer, checked at 4500 hours. The panel having a finish of a Clear Coat C with no ultraviolet light stabilizer and Paint F with a large amount of ultraviolet light stabilizer checked at 3900 hours and failed after 4500 hours. The panel having a finish of a Clear Coat G and Paint G, the only panel containing both ultraviolet light stabilizer and antioxidant, checked at 3900 hours and failed at 4500 hours. From these results, it can be expected that clear coat/ color coat finishes that contain ultraviolet light stabilizers alone or in combination with antioxidants can be expected to have a substantially longer period of outdoor durability than those same finishes without ultraviolet light stabilizer. It appears from these results that it is the ultraviolet light stabilizer, and not the antioxidant, that contributes significantly to improved weatherability. It should be noted that the ultraviolet light stabilizer need not be in the clear coat to be effective, but can be in the color coat only, as shown by the panel having a finish of Clear Coat C and Paint F, since the ultraviolet light stabilizer will migrate from the color coat into the clear coat.

## CLAIMS

1. A liquid coating composition comprising 10-60% by weight of film-forming polymer and solvent for said polymer wherein said polymer consists essentially of:

(a) 50-80% by weight of an acrylic polymer which consists essentially of

    (i) 0-25% by weight styrene,

    (ii) 25-55% by weight methyl methacrylate,

    (iii) 38-48% by weight of a soft constituent which is either an alkyl acrylate or an alkyl methacrylate in which the alkyl groups have 2-12 carbon atoms,

    (iv) 5-20% by weight of a hydroxy containing constituent which is either a hydroxyalkyl acrylate or a hydroxyalkyl methacrylate in which the alkyl groups contain 2-4 carbon atoms, and

    (v) 1-5% by weight of an $\alpha, \beta$ -unsaturated mono-carboxylic acid;

wherein the acrylic polymer has a relative viscosity of 1.04-1.10 measured at 25°C. in ethylene dichloride according to ASTM D-445-46-T Method B.

(b) 5-50% by weight, based on the weight of the polymer, of cellulose acetate butyrate having a butyryl content of about 45-55% by weight and a viscosity at 25°C. of about 1-6 seconds measured according to ASTM D-1343-56;

(c) 5-50% by weight, based on the weight of the polymer, of a melamine formaldehyde resin which has been at least partially reacted with an aliphatic monohydric alcohol having from 1-4 carbon atoms; and

(d) at least one ultraviolet light stabilizer.

2. A composition according to claim 1 wherein the acrylic polymer consists essentially of 10-18% by weight styrene, 25-30% by weight methyl methacrylate, 38-42% by weight butyl acrylate, 10-16% by weight hydroxyethyl acrylate, and 1-3% by weight acrylic acid.

3. A composition according to claim 1 wherein the acrylic polymer consists essentially of 40-50% by weight methyl methacrylate, 40-48% by weight butyl acrylate, 6-10% by weight hydroxyethyl acrylate, and 3-5% by weight acrylic acid.

4. A composition according to any one of claims 1 to 3 which contains pigment in the amount of 0.1-20.0% pigment volume concentration.

5. A composition according to any one of claims 1 to 4 also containing plasticizer.

6. A composition according to any one of claims 1 to 5 which contains up to about 10% by weight, based on the weight of the film-forming constituents, of iron-pyrophosphate and up to about 15% by weight of finely divided silica.

7. A composition according to any one of claims 1 to 6 which contains about 1-20% by weight, based on the weight of the film-forming constituents, of ultraviolet light stabilizer.

8. A composition according to claim 7 which contains about 5-8% by weight, based on the weight of the film-forming constituents, of ultraviolet light stabilizer.

9. A composition according to any one of claims 1-8 which contains about 0.1-5% by weight, based on the weight of the film-forming constituents, of antioxidant, preferably tetrakismethylene-3-(3',5'-dibutyl.4'-hydroxyphenyl) propionate methane, wherein the weight ratio of ultraviolet light stabilizer to antioxidant is about 1:1 to about 50:1.

10. A composition according to claims 8 or 9 which contains about 0.1-1% by weight, based on the weight of the film-forming constituents, of antioxidant, wherein the weight ratio of ultraviolet light stabilizer to antioxidant is preferably about 10:1.

11. A composition according to any one of claims 1 to 10 wherein the ultraviolet light stabilizer is a benzophenone or a substituted benzotriazole, preferably 2-(2'-hydroxyphenyl)-benzotriazole.

12. A coated article consisting essentially of a substrate, a first coating on said substrate, said first coating consisting essentially of the film-forming constituents of the coating composition of claim 1 containing pigment in the amount of 0.1-20.0% pigment volume concentration, and a transparent second coating over said first coating.

13. A coated article according to claim 12 wherein the first coating is about 1.0 mil thick and the second coating is about 1.0-1.3 mils thick, and wherein preferably both the first and second coating contain ultraviolet light stabilizer.

14. A coated article according to claim 12 wherein both the first and second coating consist essentially of the composition of claim 10.

15. A process for producing an acrylic enamel finish having excellent aesthetic properties and outstanding weatherability and durability, which comprises:

A. depositing on a substrate a first coating consisting essentially of:

(1) the film-forming constituents of the coating composition of claim 1,

(2) pigment in the amount of 0.1-20.0% pigment volume concentration, and

(3) volatile organic solvent for said film-forming constituents;

B. allowing said substrate to air dry for about 10 minutes;

C. depositing over said first coating a transparent second coating; and

D. heating the resultant multilayer coating at a temperature in the range of from about 125°C. to about 175°C. for about 15 minutes to 30 minutes.

0029594

**European Patent Office**

**EUROPEAN SEARCH REPORT**

Application number
EP 80 10 7268

## DOCUMENTS CONSIDERED TO BE RELEVANT

| Category | Citation of document with indication, where appropriate, of relevant passages | Relevant to claim |
|---|---|---|
| D | US - A - 3 637 546 (F.W. PARKER)  <br> * claims * <br> -- | 1-15 |
| | FR - A - 1 551 585 (LAVORAZIONE MATERIE PLASTICHE) <br> * abstract * <br> -- | 1-15 |
| | US - A - 3 522 207 (D.H.A. HAYER et al.) <br> * claims * <br> -- | 1-15 |
| | FR - A - 1 429 032 (AMERICAN CYANAMID) <br> * abstract * <br> ------- | 1-15 |

**CLASSIFICATION OF THE APPLICATION (Int. Cl.³)**

C 09 D 3/81
3/80
C 08 L 33/06

**TECHNICAL FIELDS SEARCHED (Int. Cl.³)**

C 09 D 3/81
3/80
C 08 L 33/00
33/02
33/04
33/06
33/08
33/10
33/12
C 09 D 5/32
C 08 K 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-02-1981 | FOUQUIER |

EPO Form 1503.1 06.78